# EUROPÄISCHE PATENTSCHRIFT

(11) **EP 0 977 816 B1**
(45) Veröffentlichungstag und Bekanntmachung des Hinweises auf die Patenterteilung: **24.07.2002**
(21) Anmeldenummer: 98920540.6
(22) Anmeldetag: 21.04.1998
(51) Int. Cl.: C09D 5/00, C08K 3/04

(54) **BESCHICHTUNGSMATERIAL FÜR STRAHLUNGSFLÄCHEN ZUR ERZEUGUNG ELEKTROMAGNETISCHER WELLEN UND VERFAHREN ZU DESSEN HERSTELLUNG**
COATING MATERIAL FOR RADIATION SURFACES TO PRODUCE ELECTROMAGNETIC WAVES AND A METHOD FOR MANUFACTURING SAID MATERIAL
MATERIAU DE REVETEMENT POUR SURFACES DE RAYONNEMENT S'UTILISANT POUR PRODUIRE DES ONDES ELECTROMAGNETIQUES ET PROCEDE PERMETTANT DE LE PRODUIRE

(30) Priorität: 28.04.1997 DE 19717682
(43) Veröffentlichungstag der Anmeldung: 09.02.2000
(73) Patentinhaber: Molekulare Energietechnik AG, 9490 Vaduz (LI)
(72) Erfinder: REICHELT, Helmut, D-01069 Dresden (DE)
(74) Vertreter: Neubauer, Hans-Jürgen, Dipl.-Phys.
(86) Internationale Anmeldenummer: EP9802329
(87) Internationale Veröffentlichungsnummer: WO9849242

(56) Entgegenhaltungen:
- EP-A- 0 262 630
- EP-A- 0 312 688
- EP-A- 0 525 808
- US-A- 4 186 294
- PATENT ABSTRACTS OF JAPAN vol. 096, no. 006, 28. Juni 1996 & JP 08 034923 A (SEKISUI CHEM CO LTD), 6. Februar 1996
- DATABASE WPI Week 8429 Derwent Publications Ltd., London, GB; AN 177457 XP002073623 "electromagnet wave radiate surface " & DD 208 029 A (VEB WOHNUNGSBAUKOMB) in der Anmeldung erwähnt

## Beschreibung

Die Erfindung betrifft ein Beschichtungsmaterial für Strahlungsflächen zur Erzeugung elektromagnetischer Wellen nach dem Oberbegriff des Anspruchs 1 und ein Verfahren zu dessen Herstellung nach dem Oberbegriff des Anspruchs 9.

Derartige Beschichtungsmaterialien werden auf Strahlungsflächen von Strahlern aufgebracht, die in der Energietechnik, insbesondere in der Kälteund Klimatechnik Anwendung finden. Die von dem Strahler im Zusammenwirken mit dem Beschichtungsmaterial erzeugten elektromagnetischen Wellen dienen z.B. zur Abkühlung und Erwärmung eines in den Strahlungsbereich des Strahlers gebrachten Materials.

Aus der DD-208 029 ist bereits ein Beschichtungsmaterial für Strahlungsflächen zur Erzeugung elektromagnetischer Wellen und ein Verfahren zu dessen Herstellung bekannt. Das Beschichtungsmaterial ist eine Mischung aus Bindemittel, Isolationsmittel, Dispergiermittel, Wasser und Graphit. Als Bindemittel wird ein Polyvinylacetat und/oder ein Polyacrylat und/oder ein Polypeptid verwendet, während als Isolationsmittel ein isolierender Ruß verwendet wird. Graphit, Ruß und Bindemittel bilden im Beschichtungsmaterial elektrische Dipole aus, die im angeregten Zustand elektromagnetische Wellen aussenden. Das Verfahren zur Herstellung dieses Beschichtungsmaterials umfaßt im wesentlichen das Vermischen dieser Substanzen mittels eines Rühraggregats und das Aufbringen von Drücken zur Zerkleinerung der Ruß- und Graphitpartikel.

Hier sind lediglich globale Angaben über die grundsätzliche Zusammensetzung eines Beschichtungsmaterials gemacht, aus denen sich keine konkrete Zusammensetzung des Beschichtungsmaterials mit guter Effektivität im Hinblick auf die Abstrahlung elektromagnetischer Wellen ergibt.

Es ist daher Aufgabe der Erfindung, ein Beschichtungsmaterial bestimmter Zusammensetzung vorzuschlagen, mit dem eine effektive Abstrahlung elektromagnetischer Wellen erreicht wird, sowie ein Verfahren zur Herstellung dieses Beschichtungsmaterials bereitzustellen.

Diese Aufgabe wird hinsichtlich des Beschichtungsmaterials mit den Merkmalen des Anspruch 1 und hinsichtlich des Verfahrens zur Herstellung eines Beschichtungsmaterials nach den Merkmalen des Anspruch 9 gelöst.

Gemäß Anspruch 1 ist das Bindemittel zusammengesetzt aus
- 64 bis 79 % Stoffmengenanteile destilliertem Wasser,
- 4 bis 6 % Stoffmengenanteile sulfatiertem Öl,
- 0,16 bis 0,24 % Stoffmengenanteile Phenole oder 0,05 bis 0,5 % Stoffmengenanteile Benzisothiazolinon,
- 15 bis 19 % Stoffmengenanteile Kasein,
- 0,8 bis 1,2 % Stoffmengenanteile Harnstoff,
- 2 bis 3 % Stoffmengenanteile alkalisches Verdünnungsmittel und
- 2,5 bis 3,5 % Stoffmengenanteile Caprolactam.

Das Beschichtungsmaterial selbst ist zusammengesetzt aus 55 bis 65 % Stoffmengenanteile einer Grundsubstanz und 35 bis 45 % Stoffmengenanteile Graphit, wobei die Grundsubstanz eine Mischung aus 39 bis 49 % Stoffmengenanteile Bindemittel, 18 bis 23 % Stoffmengenanteile Isolationsmittel, 18 bis 24 % Stoffmengenanteile Dispergiermittel und 12 bis 16 % Stoffmengenanteile destilliertem Wasser besteht. In dieser Zusammensetzung bildet das Beschichtungsmaterial eine Vielzahl gleichmäßig verteilter, kleinster elektrischer Dipole auf, die von dem Isolationsmittel, dem Graphit und dem Bindemittel gebildet sind.

Das Bindemittel umfaßt dabei als Hauptbestandteil destilliertes Wasser, das für eine je nach Zugabemenge wenigstens zähflüssige Konsistenz des Bindemittels sorgt. Dadurch können die einzelnen Komponenten des Bindemittels gut miteinander vermischt werden.

Das sulfatierte Öl und gegebenenfalls ein Verlaufmittel dienen als Lösungsvermittler und bewirken eine gleichmäßige und stabile Verteilung der einzelnen Stoffe in dem Bindemittel, sowie die gute Filmbildung des Beschichtungsmaterials auf einem Trägermaterial.

Die in dem Bindemittel enthaltenen Phenole oder Benzisothiazolinon begünstigen bereits in kleinen Mengen die Anlagerung von Partikeln.

Das Kasein ist als Bindemittel im Bindemittel anzusehen und bewirkt eine Anlagerung der einzelnen Komponenten innerhalb des Bindemittels.

Der Harnstoff wird im Bindemittel ebenfalls als Lösungsvermittler verwendet, d.h. er begünstigt die gleichmäßige Verteilung der einzelnen Komponenten in dem Bindemittel.

Zusätzlich ist in dem Bindemittel ein der Homogenisierung dienendes Verdünnungsmittel sowie Caprolactam als Aufbaustoff enthalten.

Die Grundsubstanz umfaßt als Hauptbestandteil das Bindemittel, an das sich die Partikel des Isolationsmittels als der eine Teil des elektrischen Dipols anlagern. Das Dispergiermittel erleichtert dabei das Dispergieren und damit die gleichmäßige Verteilung des Bindemittels mitsamt den Partikeln des Isolationsmittels in der Grundsubstanz. Das der Grundsubstanz beigemischte destillierte Wasser dient der Verflüssigung der Grundsubstanz.

Das im Rahmen der Mischung des Beschichtungsmaterials zugegebene Graphit lagert sich mit seinen einzelnen Partikeln schließlich ebenfalls an das bereits das Isolationsmittel bindende Bindemittel an und bildet zusammen mit dem Isolationsmittel eine Vielzahl kleinster elektrischer Dipole, die gleichmäßig in dem Beschichtungsmaterial verteilt sind. Das Graphit kann bereits im gemahlenen Zustand mit einer sehr kleinen Partikelgröße zugegeben werden. Dadurch wird eine gleichmäßige Verteilung des Graphits in dem Beschichtungsmaterial und damit die Ausbildung einer Vielzahl elektrischer Dipole zusätzlich begünstigt. Mit diesem Beschichtungsmaterial wird somit ein hoher Abstrahlgrad im Hinblick auf die Erzeugung und Aussendung elektromagnetischer Strahlung erreicht. Eine mit einem derartigen Beschichtungsmaterial beschichtete Strahlungsfläche strahlt bei einer hochfrequenten Anregung elektromagnetische Strahlung mit einer entsprechend hohen Frequenz ab. Das Beschichtungsmaterial hat dabei nach der Herstellung vorzugsweise eine wenigstens zähflüssige, streichbare Konsistenz und trocknet nach der Beschichtung einer Strahlungsfläche, wobei bevorzugt eine durchgehend rißfreie Oberfläche erzeugt wird.

Als sulfatierte Öle können z. B. sulfatiertes Olivenöl, sulfatlertes Sesamöl oder sulfatiertes Palmöl verwendet werden. Nach Anspruch 2 ist das sulfurierte Öl jedoch bevorzugt sulfatiertes Ricinusöl, das als Sulforicinat oder als Türkischrotöl bekannt ist. Dieses sulfatierte Ricinusöl ist insbesondere wegen seiner grenzflächenaktiven Eigenschaften gut geeignet.

Nach Anspruch 3 sind die Phenole vorzugsweise carbonisierte, durch Cracken hergestellte Phenole, die eine besondere Eignung für die Teilchen anlagerung aufweisen. Anstelle der Phenole ist vorzugsweise Benzisothiazolinon zu verwenden.

Nach Anspruch 4 ist das Verdünnungsmittel ein Lösungsmittel auf Aromatenbasis und/oder Alkoholbasis und/oder Esterbasis und/oder Ketonbasis, z. B. Terpene.

Als Isolationsmittel können eine Vielzahl bekannter Isolatoren verwendet werden. Nach Anspruch 5 ist das Isolationsmittel jedoch bevorzugt ein isolierender Ruß. Dieser Ruß wird vorteilhafterweise bereits im gemahlenen Zustand mit einer sehr kleinen Partikelgröße zugegeben. Dadurch wird eine gleichmäßige Verteilung des Rußes in der Grundsubstanz und damit insgesamt die Ausbildung einer Vielzahl elektrischer Dipole in dem Beschichtungsmaterial begünstigt.

Nach Anspruch 6 ist das Dispergieren und damit die gleichmäßige Verteilung des Bindemittels mitsamt den Partikeln des Isolationsmittels in der Grundsubstanz erleichternde Dispergiermittel eine organische, monomere und/oder polymere Substanz.

Nach Anspruch 7 ist dem Beschichtungsmaterial in einer bevorzugten Ausführungsform ein Thixotropierungsmittel zugebbar. Dieses Thixotropierungsmittel bewirkt, daß das Beschichtungsmaterial eine dickflüssige Konsistenz aufweist, d.h. während des Aufbringens auf eine Strahlungsfläche leicht streichbar ist, im Ruhezustand dagegen so zäh ist, daß es zu keiner Tropfen- oder Tränenbildung an der Oberfläche kommen kann. Dadurch wird eine konturengenaue Aufbringung des Beschichtungsmaterials auf eine Strahlungsfläche möglich.

In einer bevorzugten Ausführungsform ist das Beschichtungsmaterial nach Anspruch 8 auf einer Strahlungsfläche eines Strahlers aufgebracht, mit dem eine elektromagnetische Strahlung mit einer Frequenz abstrahlbar ist, die in der Größenordnung der molekularen Eigenfrequenz des für eine Erwärmung oder Abkühlung in den Strahlungsbereich des Strahlers einbringbaren Materials liegt. Dieser Strahler ist großflächig ausgebildet und wird von zwei Zuleitungen begrenzt, die parallel zueinander angeordnet sind und einen Abstand voneinander aufweisen, der einem ganzzahligen Vielfachen der vom Strahler abgestrahlten Wellenlänge entspricht. Mit diesem Strahler ist sowohl eine Frequenz im Bereich der molekularen Eigenfrequenz des zu erwärmenden bzw. abzukühlenden Materials als auch eine entsprechende geeignete Frequenz für ein zusätzlich im Raum angeordnetes flüssiges oder gasförmiges Medium emitierbar. Damit kann auch dieses Medium in den Prozeß der Temperaturveränderung einbezogen werden. Durch die Wechselwirkung des Strahlers mit dem zu erwärmenden bzw. abzukühlenden Material im Bereich von dessen Resonanzfrequenz mit den molekularen Eigenfrequenzen wird ein hoher Wirkungsgrad erreicht. Das erfindungsgemäße Beschichtungsmaterial mit seiner Vielzahl von Dipolen trägt hier dazu bei, ein insgesamt effektives Abstrahlungssystem für elektromagnetische Wellen mit einem hohen Abstrahlgrad bereitzustellen.

Nach Anspruch 9 werden in einem ersten Verfahrensschritt zur Herstellung des Bindemittels
- 64 bis 79 % Stoffmengenanteile destilliertes Wasser,
- 4 bis 6 % Stoffmengenanteile sulfatiertes Öl,
- 0,16 bis 0,24 % Stoffmengenanteile Phenol oder 0,05 bis 0,5 % Stoffmengenanteile Benzisothiazolinon,
- 15 bis 19 % Stoffmengenanteile Kasein,
- 0,8 bis 1,2 % Stoffmengenanteile Harnstoff,
- 2 bis 3 % Stoffmengenanteile alkalisches Verdünnungsmittel und
- 2,5 bis 3,5 % Stoffmengenanteile Caprolactam
miteinander vermischt.

In einem zweiten Verfahrensschritt werden zur Herstellung einer Grundsubstanz
- 39 bis 49 % Stoffmengenanteile des im ersten Verfahrensschritt hergestellten Bindemittels,
- 18 bis 23 % Stoffmengenanteile Isolationsmittel,
- 18 bis 24 % Stoffmengenanteile Dispergiermittel und
- 12 bis 16 % Stoffmengenanteile destilliertes Wasser
miteinander vermischt.

Anschließend werden in einem dritten Verfahrensschritt zur Herstellung des Beschichtungsmaterials 55 bis 65 % Stoffmengenanteile dieser Grundsubstanz und 35 bis 45 % Stoffmengenanteile Graphit miteinander vermischt, wobei das Isolationsmittel, das Graphit und das Bindemittel eine Vielzahl elektrischer Dipole zum Aussenden elektromagnetischer Wellen ausbilden.

Die Substanzen werden in den einzelnen Verfahrensschritten mittels Mischund/oder Knetwerkzeugen vermischt, so z.B. in eine besonders intensive Durchmischung gewährleistenden Schneckenmischern, Walzenmischern, Zentrifugalmischern. Diese Mischer bewirken gleichzeitig auch eine Zerkleinerung der zugegebenen Partikel, insbesondere der im zweiten Verfahrensschritt zugegebenen Partikel des Isolationsmittels und der im dritten Verfahrensschritt zugegebenen Graphitpartikel. Diese Partikel sind somit fein und vor allem auch gleichmäßig in dem Beschichtungsmaterial verteilt und bilden eine Vielzahl kleinster elektrischer Dipole zur Erzeugung elektromagnetischer Wellen mit einem hohen Abstrahlgrad aus. Das Beschichtungsmaterial ist auf diese Weise einfach und damit auch preisgünstig herstellbar.

In einer nach Anspruch 10 bevorzugten Form des Herstellungsverfahren wird in dem Bindemittel als sulfatiertes Öl bevorzugt sulfatiertes Ricinusöl verwendet, das insbesondere wegen seiner grenzflächenaktiven Eigenschaften gut geeignet ist. Als Phenole werden im Bindemittel bevorzugt carbonisierte, durch Cracken hergestellte Phenole oder Benzisothiazolinon verwendet. Weiter wird in dem Bindemittel beim bevorzugten Herstellungsverfahren als Verdünnungsmittel ein Lösungsmittel auf Aromatenbasis und/oder Alkoholbasis und/oder Esterbasis und/oder Ketonbasis verwendet. In der Grundsubstanz wird als Isolationsmittel bevorzugt ein isolierender Ruß verwendet, der vorteilhafterweise bereits im gemahlenen Zustand mit einer sehr kleinen Partikelgröße zugegeben wird. Dadurch wird eine gleichmäßige Verteilung des Rußes in der Grundsubstanz und damit insgesamt die Ausbildung einer Vielzahl elektrischer Dipole in dem Beschichtungsmaterial begünstigt. Weiter wird als das Dispergieren und damit die gleichmäßige Verteilung des Bindemittels mitsamt den Partikeln des Isolationsmittels in der Grundsubstanz erleichterndes Dispergiermittel eine anorganische und/oder organische, monomere und/oder polymere Substanz verwendet.

Nach Anspruch 11 wird dem Beschichtungsmaterial zusätzlich ein Thixotropierungsmittel zugemischt. Dieses Thixotropierungsmittel bewirkt, daß das Beschichtungsmaterial während des Aufbringens auf eine Strahlungsfläche leicht streichbar ist, im Ruhezustand dagegen so zäh ist, daß es zu keiner Tropfenbildung an der Oberfläche kommen kann.

Nach Anspruch 12 wird das nach der Herstellung streichfähige Beschichtungsmaterial durch Spritz-, Streich- oder Rakelverfahren auf eine Strahlungsfläche eines Strahlers aufgebracht und dort getrocknet. Die Auftragsmenge wird so gewählt, daß eine Trockenschicht von z. B. 60 bis 80 Mikrometer Schichtdicke entsteht. Mit dem Strahler kann dann eine elektromagnetische Strahlung mit einer Frequenz abgestrahlt werden, die in der Größenordnung der molekularen Eigenfrequenz des für eine Erwärmung oder Abkühlung in den Strahlungsbereich des Strahlers einbringbaren Materials liegt.

Eine bevorzugte Zusammensetzung des Beschichtungsmaterials wird nachfolgend anhand eines konkreten Beispiels dargestellt:

In einem ersten Verfahrensschritt wird ein Bindemittel hergestellt durch Vermischen von

| | |
|---|---|
| 71,4 % | Stoffenmengenanteile destilliertem Wasser, |
| 5,0 % | Stoffmengenanteile sulfatiertem Ricinusöl, |
| 0,2 % | Stoffmengenanteile carbonisierter, durch Cracken hergestellter Phenole, |
| 16,9 % | Stoffmengenanteile Kasein, |
| 1,0 % | Stoffmengenanteile Harnstoff, |
| 2,5 % | Stoffmengenanteile Verdünndungsmittel und |
| 3,0 % | Stoffmengenanteile Caprolactam. |

Anschließend wird in einem zweiten Verfahrensschritt eine Grundsubstanz hergestellt durch Vermischen von

| | |
|---|---|
| 44,2 % | Stoffmengenanteile des Bindemittels, |
| 20,7 % | Stoffmengenanteile eines isolierenden Rußes, |
| 21,0 % | Stoffmengenanteile eines Dispergiermittels und |
| 14,1 % | Stoffmengenanteile destilliertes Wasser. |

Abschließend wird in einem dritten Verfahrensschritt ein Beschichtungsmaterial hergestellt durch Vermischen von

| | |
|---|---|
| 60 % | Stoffmengenanteile der Grundsubstanz und |
| 40 % | Stoffmengenanteile Graphit als Pielektronensystem. |

Dieses Beschichtungsmaterial wurde auf eine Strahlungsfläche eines Strahlers aufgebracht, an der Luft getrocknet und der Strahler anschließend angeregt. Die dabei gemessene elektromagnetische Abstrahlung wies einen hohen Abstrahlgrad auf.

Bei der Herstellung des Bindemittels werden die einzelnen Komponenten in einem konkreten Verfahrensablauf in einem Mischer mit z.B. 2000 Umdrehungen/min für 10 bis 20 Minuten gemischt. In dem zweiten Verfahrensschritt wird ebenfalls mit z.B. 2000 Umdrehungen/min für 10 bis 20 Minuten gemischt, wobei zusätzlich auch noch Drücke auf die Grundsubstanz in Höhe von 6 bis 18 MPa aufgebracht werden können, die eine Zerkleinerung der Rußpartikel auf eine Partikelgröße von kleiner als 40 Mikrometer bewirken. Im dritten Verfahrensschritt werden die Substanzen ebenfalls bei z.B. 2000 Umdrehungen/min für 10 bis 20 Minuten gemischt, wobei zusätzlich intervallartige Drücke in der Größenordnung von 6 bis 18 MPa auf das Beschichtungsmaterial aufgebracht werden können, die Scherkräfte zur Folge haben, die eine gestreckte Anordnung der Dipole in dem Beschichtungsmaterial begünstigen. Weiter kann zur vorzugsweisen Dispergierung der einzelnen Komponenten die Ultraschalldispergiertechnik verwendet werden, die eine besonders feine Verteilung der Partikel und damit der Dipole gewährleistet.

## Patentansprüche

1. Beschichtungsmaterial für Strahlungsflächen zur Erzeugung elektromagnetischer Wellen,
bestehend aus Bindemittel, Isolationsmittel, Dispergiermittel, Wasser und Graphit,
**dadurch gekennzeichnet,**
**daß** das Beschichtungsmaterial zusammengesetzt ist aus
a. 55 bis 65 % Stoffmengenanteile einer Grundsubstanz aus
• 39 bis 49 % Stoffmengenanteile Bindemittel,
• 18 bis 23 % Stoffmengenanteile Isolationsmittel,
• 18 bis 24 % Stoffmengenanteile Dispergiermittel,
• 12 bis 16 % Stoffmengenanteile destilliertes Wasser
und
b. 35 bis 45 % Stoffmengenanteile Graphit,
wobei das Bindemittel zusammengesetzt ist aus
• 64 bis 79 % Stoffmengenanteile destilliertes Wasser,
• 4 bis 6 % Stoffmengenanteile sulfatiertes Öl,
• 0,16 bis 0,24 % Stoffmengenanteile Phenole oder 0,05 bis 0,5 % Stoffmengenanteile Benzisothiazolinon,
• 15 bis 19 % Stoffmengenanteile Kasein,
• 0,8 bis 1,2 % Stoffmengenanteile Harnstoff,
• 2 bis 3 % Stoffmengenanteile alkalisches Verdünnungsmittel, und
• 2,5 bis 3,5 % Stoffmengenanteile Caprolactam, und
wobei das Isolationsmittel, das Graphit und das Bindemittel elektrische Dipole zum Aussenden elektromagnetischer Wellen bilden.

2. Beschichtungsmaterial nach Anspruch 1, **dadurch gekennzeichnet, daß** das sulfurierte Öl bevorzugt sulfatiertes Ricinusöl ist.

3. Beschichtungsmaterial nach Anspruch 1 oder Anspruch 2, **dadurch gekennzeichnet, daß** die Phenole carbonisierte, durch Cracken hergestellte Phenole sind oder vorzugsweise Benzisothiazolinon verwendet wird.

4. Beschichtungsmaterial nach einem der Ansprüche 1 bis 3, **dadurch gekennzeichnet, daß** das Verdünnungsmittel ein Lösungsmittel auf Aromatenbasis und/oder Alkoholbasis und/oder Esterbasis und/oder Ketonbasis ist.

5. Beschichtungsmaterial nach einem der Ansprüche 1 bis 4, **dadurch gekennzeichnet, daß** das Isolationsmittel ein isolierender Ruß ist.

6. Beschichtungsmaterial nach einem der Ansprüche 1 bis 5, **dadurch gekennzeichnet, daß** das Dispergiermittel eine anorganische und/oder organische, monomere und/oder polymere Substanz ist.

7. Beschichtungsmaterial nach einem der Ansprüche 1 bis 6, **dadurch gekennzeichnet, daß** dem Beschichtungsmaterial ein Thixotropierungsmittel zugebbar ist.

8. Beschichtungsmaterial nach einem der Ansprüche 1 bis 7, **dadurch gekennzeichnet, daß** das Beschichtungsmaterial auf eine Strahlungsfläche eines Strahlers aufgebracht ist, so daß eine elektromagnetische Strahlung mit einer Frequenz abstrahlbar ist, die in der Größenordnung der molekularen Eigenfrequenz des für eine Erwärmung oder Abkühlung in den Strahlungsbereich des Strahlers einbringbaren Materials liegt.

9. Verfahren zur Herstellung eines Beschichtungsmaterials für Strahlungsflächen zur Erzeugung elektromagnetischer Wellen,
bei dem Bindemittel, Isolationsmittel, Dispergiermittel, Wasser und Graphit miteinander vermischt werden,
**dadurch gekennzeichnet,**
**daß** in einem ersten Verfahrensschritt zur Herstellung des Bindemittels
• 64 bis 79 % Stoffmengenanteile destilliertes Wasser,
• 4 bis 6 % Stoffmengenanteile sulfatiertes Öl,
• 0,16 bis 0,24 % Stoffmengenanteile Phenolen oder 0,05 bis 0,5 % Stoffmengenanteile Benzisothiazolinon,
• 15 bis 19 % Stoffmengenanteile Kasein,
• 0,8 bis 1,2 % Stoffmengenanteile Harnstoff,
• 2 bis 3 % Stoffmengenanteile alkalisches Verdünnungsmittel, und
• 2,5 bis 3,5 % Stoffmengenanteile Caprolactam
miteinander vermischt werden,
**daß** in einem zweiten Verfahrensschritt zur Herstellung einer Grundsubstanz
• 39 bis 49 % Stoffmengenanteile Bindemittel,
• 18 bis 23 % Stoffmengenanteile Isolationsmittel,
• 18 bis 24 % Stoffmengenanteile Dispergiermittel, und
• 12 bis 16 % Stoffmengenanteile destilliertes Wasser
miteinander vermischt werden, und
**daß** in einem dritten Verfahrensschritt zur Herstellung des Beschichtungsmaterials
• 55 bis 65 % Stoffmengenanteile der Grundsubstanz, und
• 35 bis 45 % Stoffmengenanteile Graphit
miteinander vermischt werden,
wobei das Isolationsmittel, das Graphit und das Bindemittel elektrische Dipole zum Aussenden elektromagnetischer Wellen bilden.

10. Verfahren zur Herstellung eines Beschichtungsmaterials nach Anspruch 9, **dadurch gekennzeichnet,**
**daß** im Bindemittel als sulfuriertes Öl bevorzugt sulfatiertes Ricinusöl verwendet wird,
**daß** im Bindemittel als Phenole bevorzugt carbonisierte, durch Cracken hergestellte Phenole verwendet werden oder Benzisothiazolinon verwendet wird,
**daß** im Bindemittel als Verdünnungsmittel ein Lösungsmittel auf Aromatenbasis und/oder Alkoholbasis und/oder Esterbasis und/oder Ketonbasis verwendet wird,
**daß** in der Grundsubstanz als Isolationsmittel ein isolierender Ruß verwendet wird, und
**daß** in der Grundsubstanz als Dispergiermittel eine anorganische und/oder organische, monomere und/oder polymere Substanz verwendet wird.

11. Verfahren zur Herstellung eines Beschichtungsmaterials nach Anspruch 9 oder Anspruch 10, **dadurch gekennzeichnet, daß** dem Beschichtungsmaterial ein Thixotropierungsmittel zugegeben wird.

12. Verfahren zur Herstellung eines Beschichtungsmaterials nach einem der Ansprüche 9 bis 11, **dadurch gekennzeichnet, daß** das nach der Herstellung streichfähige Beschichtungsmaterial durch Spritz-, Streichoder Rakelverfahren auf eine Strahlungsfläche eines Strahlers aufgebracht wird, das dort nach einem Trocknungsprozeß fest wird, wobei mit dem Strahler eine elektromagnetische Strahlung mit einer Frequenz abgestrahlt wird, die in der Größenordnung der molekularen Eigenfrequenz des für eine Erwärmung oder Abkühlung in den Strahlungsbereich des Strahlers einbringbaren Materials liegt.

## Claims

1. Coating material for radiation surfaces for producing electromagnetic waves,
composed of binder, insulant, dispersant, water and graphite,
**characterized in that**
the coating material is composed of
a. 55 to 65% mole fractions of a base substance comprising
• 39 to 49% mole fractions of binder,
• 18 to 23% mole fractions of insulant,
• 18 to 24% mole fractions of dispersant,
• 12 to 16% mole fractions of distilled water
and
b. 35 to 45% mole fractions of graphite,
wherein the binder is composed of
• 64 to 79% mole fractions of distilled water,
• 4 to 6% mole fractions of sulphated oil,
• 0.16 to 0.24% mole fractions of phenols or 0.05 to 0.5% mole fractions of benzisothiazolinone,
• 15 to 19% mole fractions of casein,
• 0.8 to 1.2% mole fractions of urea,
• 2 to 3% mole fractions of alkaline diluent, and
• 2.5 to 3.5% mole fractions of caprolactam,
the insulant, the graphite and the binder forming electrical dipoles for emitting electromagnetic waves.

2. Coating material according to Claim 1, **characterized in that** the sulphurized oil is preferably sulphated castor oil.

3. Coating material according to Claim 1 or Claim 2, **characterized in that** the phenols are carbonized phenols produced by cracking or, preferably, benzisothiazolinone is used.

4. Coating material according to one of Claims 1 to 3, **characterized in that** the diluent is an aromatics-based and/or alcohol-based and/or ester-based and/or ketone-based solvent.

5. Coating material according to one of Claims 1 to 4, **characterized in that** the insulant is an insulating carbon black.

6. Coating material according to one of Claims 1 to 5, **characterized in that** the dispersant is an organic and/or inorganic, monomeric and/or polymeric substance.

7. Coating material according to one of Claims 1 to 6, **characterized in that** a thixotropic agent may be added to the coating material.

8. Coating material according to one of Claims 1 to 7, **characterized in that** the coating material is applied to a radiation surface of an emitter so that electromagnetic radiation having a frequency within the order of magnitude of the natural molecular frequency of the material which can be brought into the radiation area of the emitter for heating or cooling can be emitted.

9. Process for preparing a coating material for radiation surfaces for producing electromagnetic waves,
wherein binder, insulant, dispersant, water and graphite are mixed with one another,
**characterized in that**
in a first step the binder is prepared by mixing
• 64 to 79% mole fractions of distilled water,
• 4 to 6% mole fractions of sulphated oil,
• 0.16 to 0.24% mole fractions of phenols or 0.05 to 0.5% mole fractions of benzisothiazolinone,
• 15 to 19% mole fractions of casein,
• 0.8 to 1.2% mole fractions of urea,
• 2 to 3% mole fractions of alkaline diluent, and
• 2.5 to 3.5% mole fractions of caprolactam
with one another,
**in that** in a second step a base substance is prepared by mixing
• 39 to 49% mole fractions of binder,
• 18 to 23% mole fractions of insulant,
• 18 to 24% mole fractions of dispersant, and
• 12 to 16% mole fractions of distilled water
with one another, and
**in that** in a third step the coating material is prepared by mixing
• 55 to 65% mole fractions of the base substance and
• 35 to 45% mole fractions of graphite
with one another,
the insulant, the graphite and the binder forming electrical dipoles for the emission of electromagnetic waves.

10. Process for preparing a coating material according to Claim 9, **characterized**
**in that** in the binder sulphated castor oil is preferably used as sulphurized oil,
**in that** in the binder as phenols preferably carbonized phenols produced by cracking are used or benzisothiazolinone is used,
**in that** in the binder an aromatics-based and/or alcohol-based and/or ester-based and/or ketone-based solvent is used as diluent,
**in that** in the base substance an insulating carbon black is used as insulant, and
**in that** in the base substance an organic and/or inorganic, monomeric and/or polymeric substance is used as dispersant.

11. Process for preparing a coating material according to Claim 9 or Claim 10, **characterized in that** a thixotropic agent is added to the coating material.

12. Process for preparing a coating material according to one of Claims 9 to 11, **characterized in that** the coating material, which following preparation is spreadable, is applied by spraying, spreading or knife coating methods to a radiation surface of an emitter and solidified thereon after a drying process, the emitter emitting electromagnetic radiation having a frequency within the order of magnitude of the natural molecular frequency of the material which can be brought into the radiation area of the emitter for heating or cooling.

## Revendications

1. Matériau de revêtement, pour surfaces de rayonnement employées pour la production d'ondes électromagnétiques, constitué de liant, d'isolant, d'agent dispersant, d'eau et de graphite,
**caractérisé en ce que**
le matériau de revêtement est composé
a) d'une substance de base, dans une proportion comprise entre 55% et 65% en quantité de substance, constituée
- du liant dans une proportion comprise entre 39% et 49% en quantité de substance,
- de l'isolant dans une proportion comprise entre 18% et 23% en quantité de substance,
- de l'agent dispersant dans une proportion comprise entre 18% et 24% en quantité de substance,
- d'eau distillée dans une proportion comprise entre 12% et 16% en quantité de substance, et
b) du graphite dans une proportion comprise entre 35% et 45% en quantité de substance,
le liant étant constitué
- d'eau distillée dans une proportion comprise entre 64% et 79% en quantité de substance,
- d'huile sulfonée dans une proportion comprise entre 4% et 6% en quantité de substance,
- de phénols dans une proportion comprise entre 0,16% et 0,24% en quantité de substance ou de benziso-thiazolinone dans une proportion comprise entre 0,05% et 0,5% en quantité de substance,
- de caséine dans une proportion comprise entre 15% et 19% en quantité de substance,
- d'urée dans une proportion comprise entre 0,8% et 1,2% en quantité de substance,
- de diluant basique dans une proportion comprise entre 2% et 3% en quantité de substance, et
- de caprolactame dans une proportion comprise entre 2,5% et 3,5% en quantité de substance,
et l'isolant, le graphite et le liant présentant des dipôles électriques aptes à émettre des ondes électromagnétiques.

2. Matériau de revêtement selon la revendication 1, **caractérisé en ce que** l'huile sulfonée est de préférence l'huile de ricin sulfonée.

3. Matériau de revêtement selon la revendication 1 ou la revendication 2, **caractérisé en ce que** le phénol est un phénol carbonisé produit au moyen d'un craquage, ou **en ce que** l'on met en oeuvre de préférence la benzisothiazolinone.

4. Matériau de revêtement selon l'une des revendications 1 à 3 **caractérisé en ce que** le diluant est un solvant à base de composés aromatiques et/ou à base d'alcool et/ou à base d'ester et/ou à base de cétones.

5. Matériau de revêtement selon l'une des revendications 1 à 4, **caractérisé en. ce que** l'isolant est une suie isolante.

6. Matériau de revêtement selon l'une des revendications 1 à 5, **caractérisé en ce que** l'agent dispersant est une substance inorganique et/ou organique, monomère et/ou polymère.

7. Matériau de revêtement selon l'une des revendications 1 à 6, **caractérisé en ce que** l'on peut ajouter au matériau de revêtement un agent thixotrope.

8. Matériau de revêtement selon l'une des revendications 1 à 7, **caractérisé en ce que** l'on applique le matériau de revêtement sur la surface de rayonnement d'une source de rayonnement ce qui permet l'émission d'un rayonnement électromagnétique, à une fréquence comprise dans l'ordre de grandeur de la fréquence de résonance moléculaire de la substance que l'on peut introduire dans la zone de rayonnement de la source de rayonnement afin de la chauffer ou de la refroidir.

9. Procédé de préparation d'un matériau de revêtement pour surfaces de rayonnement employées pour la production des ondes électromagnétiques, lors duquel on mélange le liant, l'isolant, l'agent dispersant, l'eau et le graphite, **caractérisé en ce que**
l'on mélange, dans une première étape du procédé, en vue de préparer le liant,
- l'eau distillée dans une proportion comprise entre 64% et 79% en quantité de substance
- l'huile sulfonée dans une proportion comprise entre 4% et 6% en quantité de substance,
- le phénol dans une proportion comprise entre 0,16% et 0,24% en quantité de substance ou la benzisothiazolinone dans une proportion comprise entre 0,05% et 0,5% en quantité de substance,
- la caséine dans une proportion comprise entre 15% et 19% en quantité de substance,
- l'urée dans une proportion comprise entre 0,8% et 1,2% en quantité de substance,
- le diluant basique dans une proportion comprise entre 2% et 3% en quantité de substance et
- la caprolactame dans une proportion comprise entre 2,5% et 3,5% en quantité de substance
l'on mélange, dans une deuxième étape du procédé, en vue de préparer la substance de base,
- le liant dans une proportion comprise entre 39% et 49% en quantité de substance
- l'isolant dans une proportion comprise entre 18% et 23% en quantité de substance,
- l'agent dispersant dans une proportion comprise entre 18% et 24% en quantité de substance et
- l'eau distillée dans une proportion comprise entre 12% et 16% en quantité de substance, et
l'on mélange, dans une troisième étape du procédé, en vue de préparer le matériau de revêtement,
- la substance de base dans une proportion comprise entre 55% et 65% en quantité de substance,
- le graphite dans une proportion comprise entre 35% et 45% en quantité de substance,
procédé lors duquel l'isolant, le graphite et le liant forment des dipôles électriques aptes à émettre les ondes électromagnétiques.

10. Procédé de préparation d'un matériau de revêtement selon la revendication 9, **caractérisé en ce que**
l'on met en oeuvre, pour préparer le liant, l'huile de ricin en tant qu'huile sulfonée préférée,
l'on met en oeuvre, pour préparer le liant, en tant que phénol préféré, le phénol obtenu au moyen d'un craquage ou bien la benzisothiazolinone,
l'on met en oeuvre, en tant que diluant pour préparer le liant, un solvant à base de composés aromatiques et/ou à base d'alcool et/ou à base d'ester et/ou à base de cétone,
l'on met en oeuvre, en tant qu'isolant pour préparer la substance de base, une suie isolante et
l'on met en oeuvre, en tant qu'agent dispersant pour préparer la substance de base, une substance inorganique et/ou organique, monomère et/ou polymère.

11. Procédé de préparation d'un matériau de revêtement selon la revendication 9 ou la revendication 10, **caractérisé en ce que** l'on ajoute au matériau de revêtement un agent thixotrope.

12. Procédé de préparation d'un matériau de revêtement selon l'une des revendications 9 à 11, **caractérisé en ce que** l'on applique, en pulvérisant, en enduisant ou en raclant, sur la surface de rayonnement d'une source de rayonnement, le matériau de revêtement qui, après sa préparation présente une consistance lui permettant d'être enduit, puis qui, suite à un procédé de séchage, durcit sur la surface de rayonnement, la source de rayonnement émettant un rayonnement électromagnétique à une fréquence comprise dans l'ordre de grandeur de la fréquence de résonance moléculaire de la substance que l'on peut introduire dans la zone de rayonnement de la source de rayonnement, afin de la chauffer ou de la refroidir.
